# EUROPEAN PATENT APPLICATION

(11) **EP 2 573 745 A1**
(43) Date of publication of application: **27.03.2013**
(21) Application number: 12169349.3
(22) Date of filing: 24.05.2012
(51) Int. Cl.: G09B 23/28

(54) **Feature-based data structure for digital manikin**

(30) Priority: 21.09.2011 TW 100133998
(71) Applicant: National Cheng Kung University, Tainan City 70101 (TW)
(72) Inventor: Tsai, Ming-June, 704 North Dist., Tainan City (TW); Lee, Hung-Wen, 111 Shilin Dist., Taipei City (TW); Lung, Hsueh-Yung, 811 Nanzi Dist., Kaohsiung City (TW)
(74) Representative: 2K Patentanwälte Blasberg Kewitz & Reichel

(57) **Abstract**

A feature-based data structure of a digital manikin for describing the exterior features of a body comprises a plurality of feature points of the body, a plurality of girth lines, and a plurality of meridian lines. The girth lines pass through the feature points. Each of the meridian lines is formed by connecting the corresponding feature points respectively out of the girth lines. The girth lines of an arm of the body include an arm-hole girth, an elbow girth, and a palm base girth. The arm-hole girth passes through the shoulder end point, the front arm pit, and the rear arm pit. The elbow girth passes through the concave and convex points on the elbow girth. The palm base girth means the location where the size variation of the cross-sectional profile from the fore arm to the palm is the largest.

## Description

### BACKGROUND OF THE INVENTION

### Field of Invention

The invention relates to a feature-based data structure of digital manikin.

### Related Art

In this age of more importance on human value, commodities and environments are designed around human beings, and thus, anthropometry applied to human factor engineering and dress designing is getting more and more crucial. Anthropometry is an important subject of human factor engineering, and its data plays the most basic and important role for all designs of human factor engineering. Further more, the conventional anthropometry data includes the physique difference between the domestic and foreign people. Therefore, developing an anthropometry database belonging to the compatriots is of great urgency.

Anthropometry is an important and complicated work. Besides, only the accurate data can be utilized to design handy commodities. Anthropometry data is very useful to the designs of products, operational environments, and handy tools. On dress designing, it can help the dress designed to fit the individual physique, and customers can have their own three-dimensional model a virtual try-on to know if the made-to-order suit is fitted, and then decide if the modification is necessary or not. On human factor engineering, it can provide the consideration between the physique and the product for designers. So, the users can enjoy safe, comfortable and effective effects while using the products. On medical analyzing, the anthropometry data can provide the factors of the statistic analyzing method. For example, the physique factors that need to be considered in the urine glucose detection include the left and right thigh girths, and the area ratio of waist's cross-section to hips' cross-section.

Three-dimensional body scanning technology can help the collection of enormous data of human body dimensions. However, the outcome of the initial scanning is an enormous but non-structured point cloud, so the operator still needs to identify the body features and implement the measuring by manual operation, leading to the bad reproduction due to the personal subjective effect. Accordingly, an automatic anthropometry system with capabilities of speed, accuracy and objectivity is necessary to be developed, so that the 3D body scanning apparatus can show the enormously enhanced efficiency.

In view of the foregoing, the body feature points and feature lines need to be acquired to establish the feature-based data structure for anthropometry and the related applications, such as human factor engineering. Formerly, the feature-based data structure pertaining to the human trunk has been developed and has been patented as US Patent No. 7,218,752 and Taiwan (R.O.C.) Patent No. TW571,592. However, the feature-based data structure relating to human arms, palms, legs, and ankles is still wanting, so the complete human feature-based data structure needs to be developed and established to provide the revolutionary impact on human factor engineering and anthropometry.

### SUMMARY OF THE INVENTION

In view of the foregoing subject, an objective of the present invention is to provide a feature-based data structure of digital manikin that can record comprehensive human geometric features.

To achieve the above objective, the invention discloses a feature-based data structure of a digital manikin for describing the exterior features of a body. The feature-based data structure comprises a plurality of feature points of the body, a plurality of girth lines, and a plurality of meridian lines. The girth lines pass through the feature points. Each of the meridian lines is formed by connecting the corresponding feature points respectively out of the girth lines. The girth lines of an arm of the body include an arm-hole girth, an elbow girth, and a palm base girth. The arm-hole girth passes through the shoulder end point, the front arm pit, and the rear arm pit. The elbow girth passes through the concave and convex points on the elbow girth. The palm base girth means the location where the size variation of the cross-sectional profile from the fore arm to the palm is the largest.

In one embodiment, other girths of the arm are obtained by the interpolation using the arm-hole girth, the elbow girth, and the palm base girth.

To achieve the above objective, the invention discloses a feature-based data structure of a digital manikin for describing the exterior features of a body. The feature-based data structure comprises a plurality of feature points of the body, a plurality of girth lines, and a plurality of meridian lines. The girth lines pass through the feature points. Each of the meridian lines is formed by connecting the corresponding feature points respectively out of the girth lines. The girth lines pertaining to the body's leg include a crotch girth, a thigh girth, a knee girth, and a minimum shank girth, the thigh girth means the largest cross-sectional profile of the thigh, the knee girth is the girth line passing through the knee point, and the minimum shank girth means the smallest cross-sectional profile of the shank.

In one embodiment, other girth lines are obtained by the interpolation using the thigh girth, the knee girth, and the minimum shank girth.

To achieve the above objective, the invention discloses a feature-based data structure of a digital manikin for describing the exterior features of a body. The feature-based data structure comprises a plurality of feature points of the body, and a plurality of girth lines. The girth lines pass through the feature points. The girth lines of a palm include a palm base girth, a finger base girth, and a finger tip girth. The palm base girth means the location where the size variation of the cross-sectional profile from the fore arm to the palm is the largest. The finger base girth means the location where the cross-sectional profile of the base of the four fingers is largest while the five fingers are close to each other and bent a little. The finger tip girth means the location where the cross-sectional profile of the finger tips is smallest while the five fingers are close to each other and bent a little.

In one embodiment, other girth lines of the palm are obtained by the interpolation using the palm base girth, the finger base girth, and the finger tip girth.

To achieve the above objective, the invention discloses a feature-based data structure of a digital manikin for describing the exterior features of a body. The feature-based data structure comprises a plurality of feature points of the body, and a plurality of girth lines. The girth lines pass through the feature points. The girth lines of an ankle include an ankle girth, a heel girth, and a foot print girth. The ankle girth passes through a medial malleolus point and a lateral malleolus point. The heel girth is the level girth line passing through the protruding portion of the heel. The foot print girth is the girth line contacting the ground while the five toes are close to each other.

In one embodiment, other girth lines of the ankle can be obtained by the interpolation using the ankle girth, the heel girth, and the foot print girth.

To achieve the above objective, the invention discloses a feature-based data structure of a digital manikin for describing the exterior features of a body. The feature-based data structure comprises a plurality of feature points of the body, a plurality of girth lines, and a plurality of meridian lines. The girth lines pass through the feature points. Each of the meridian lines is formed by connecting the corresponding feature points respectively out of the girth lines. The girth lines of a palm include a palm base girth, a lower thumb base girth, an upper thumb base girth, and a finger base girth. The palm base girth means the location where the size variation of the cross-sectional profile from the fore arm to the palm is the largest. The lower thumb base girth is the girth line passing through the lower side of the thumb base. The upper thumb girth is the girth line passing through the upper side of the thumb base. The finger base girth is the girth line passing the four fingers' bases while the four fingers are spread a little.

In one embodiment, other girth lines are obtained by the interpolation using the palm base girth, the lower thumb girth, the upper thumb girth, and the finger base girth.

In summary, by the feature-based data structure of the invention, the non-structured point cloud obtained by the 3D body scanning can be arranged to become the structured data truly describing the body profile with the most simplified structure, and thus the size of body data can be reduced a lot. The meridian lines and the girth lines disclosed in the invention all pass through the feature points of the body, and are similar to the longitude and latitude of the earth respectively, but not arranged in the regular angle. Besides, the meridian lines and girth lines of the invention are designed according to the body features, so all the feature points and feature lines that the human factor engineering needs are included, and can be applied to the fields such as medical engineering, anthropometry, and dress designing. Furthermore, all the joint locations and kinematics parameters of a human body also can be defined by using the locations of the feature points of the meridian lines and girth lines.

Besides, the simplified feature-based data structure of the invention can be easily and efficiently stored, retrieved, manipulated, processed, displayed, and transmitted rapidly through the network. Furthermore, some part of the feature-based data structure can be extracted to do the related product design for human beings. Accordingly, the invention provides an advanced and standardized method for the world to record the geometric features of human beings. By the method, all countries in the world can easily build up their own anthropometry database, and this will provide very large advantage to the collection and statistics of the human physique, the studies of human factor engineering, military affairs, and medical science, as well as the business of computer animation, entertainment, and human appliances. Therefore, the feature-based data structure of the digital manikin of the invention is worthy of promoting as a world standard.

### BRIEF DESCRIPTION OF THE DRAWINGS

The invention will become more fully understood from the detailed description and accompanying drawings, which are given for illustration only, and thus are not limitative of the present invention, and wherein:

FIG. 1 is a schematic diagram of a feature-based data structure of a digital manikin pertaining to an arm according to a preferred embodiment of the invention;

FIG. 2 is a schematic diagram of the arm-hole girth of the arm of a feature-based data structure of a digital manikin according to a preferred embodiment of the invention;

FIG. 3 is a schematic diagram of a feature-based data structure of a digital manikin pertaining to a leg according to a preferred embodiment of the invention, including a front view and a side view of the leg;

FIG. 4 is a schematic diagram of a feature-based data structure of a digital manikin pertaining to a palm according to a preferred embodiment of the invention;

FIG. 5 is a schematic perspective view of a feature-based data structure of a digital manikin pertaining to an ankle according to a preferred embodiment of the invention;

FIG. 6 is a schematic diagram of a feature-based data structure of a digital manikin pertaining to a palm according to a preferred embodiment of the invention;

FIG. 7 is a schematic diagram of the palm base girth of the palm of the feature-based data structure of the digital manikin according to the preferred embodiment of the invention;

FIG. 8 shows the lower thumb base girth of the palm of the feature-based data structure of the digital manikin according to the preferred embodiment of the invention;

FIG. 9 shows the upper thumb base girth of the palm of the feature-based data structure of the digital manikin according to the preferred embodiment of the invention;

FIG. 10 is a schematic diagram of the thumb of the palm of the feature-based data structure of the digital manikin according to the preferred embodiment of the invention; and

FIG. 11 is a schematic diagram of the finger of the palm of the feature-based data structure of the digital manikin according to the preferred embodiment of the invention.

### DETAILED DESCRIPTION OF THE INVENTION

The present invention will be apparent from the following detailed description, which proceeds with reference to the accompanying drawings, wherein the same references relate to the same elements.

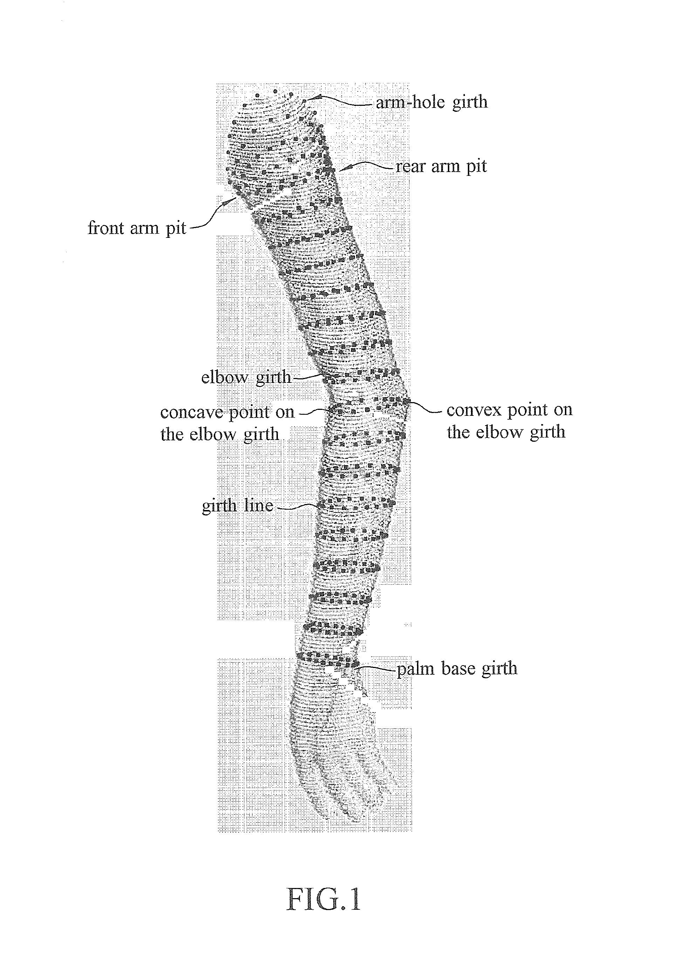

FIG. 1 is a schematic diagram of a feature-based data structure of a digital manikin pertaining to an arm according to a preferred embodiment of the invention.

The feature-based data structure is for describing the exterior features of a body, and includes a plurality of feature points (as the black points shown in FIG. 1) of the body, a plurality of girth lines passing through the feature points and a plurality of meridian lines, each of which is formed by connecting the corresponding feature points respectively out of the girth lines.

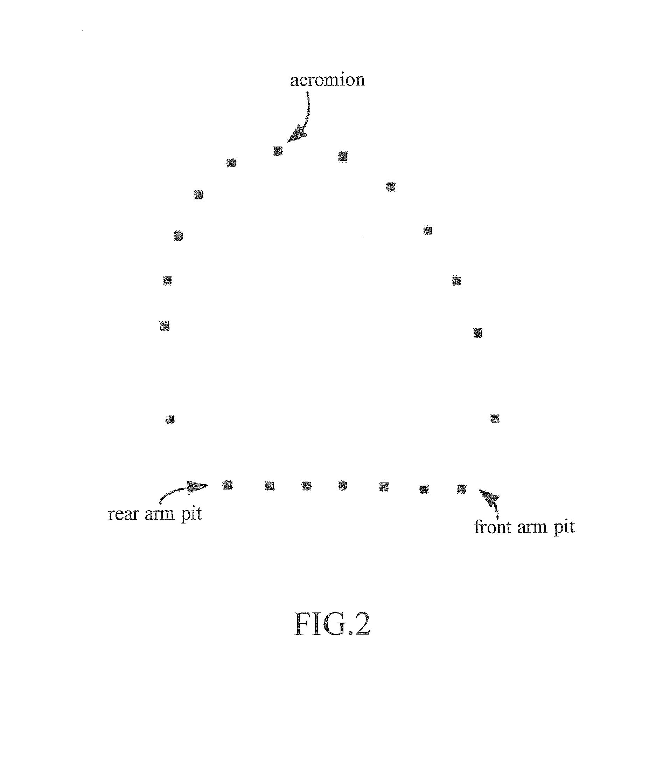

In the embodiment, the girth line is parallel with a cross-section of the arm for example. The girth lines of the arm of the body include an arm-hole girth, an elbow girth, and a palm base girth. The arm-hole girth, a plane view thereof as shown in FIG. 2, passes through the acromion, the front arm pit, and the rear arm pit. The acromion is common in the field of dress designing and anthropometry, so the definition thereof is omitted here. To be noted, only the arm pit is formerly defined, however, the arm pit is not easy to be scanned by a 3D scanning apparatus, it is developed to the front arm pit and the rear arm pit. The front arm pit is defined as the arm pit that is viewed toward the front side of a body by a viewer in front of the human. The rear arm pit is defined as the arm pit that is viewed toward the rear side of a body by a viewer in back of the human.

The elbow girth passes through the concave and convex points on the elbow girth. The concave point on the elbow girth is the most concave location of the medial side of the elbow while the arm is bent a little. The convex point on the elbow girth is the most convex location of the lateral side of the elbow while the arm is bent a little. The palm base girth means the location where the size variation of the cross-sectional profile from the fore arm to the palm is the largest. In general, the cross-sectional profile of the arm will become smaller gradually along the downward direction, and begin to become larger from the adjacency of the palm side. Accordingly, the palm base girth means the location where the variation transition of the cross-sectional profile occurs. Other girths of the arm can be obtained by the interpolation using the arm-hole girth, the elbow girth, and the palm base girth. Each of the meridian lines is formed by connecting the corresponding feature points respectively out of the girth lines.

In the embodiment, the feature-based data structure of the arm totally has 20 meridian lines, each of which has 20 feature points, and the corresponding feature points respectively out of the meridian lines constitute a girth line. For example, the 19th feature points respectively out of the meridian lines constitute a girth line, and therefore, the arm totally has 20 girth lines. Accordingly, if the arm-hole girth is excluded, the feature-based data structure of the arm totally has 400 feature points. The number of the feature points is just for example, but not for limiting the scope of the invention.

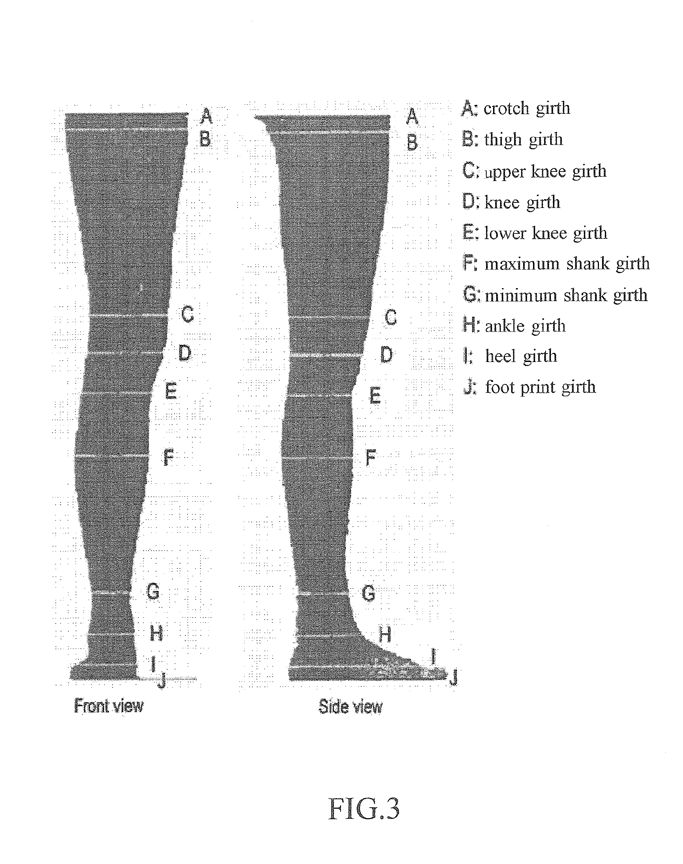

FIG. 3 is a schematic diagram of a feature-based data structure of a digital manikin pertaining to a leg according to a preferred embodiment of the invention, including a front view and a side view of the leg.

The feature-based data structure is for describing the exterior features of a body, and includes a plurality of feature points of the body, a plurality of girth lines passing through the feature points, and a plurality of meridian lines, each of which is formed by connecting the corresponding feature points respectively out of the girth lines.

In the embodiment, the girth lines pertaining to the body's leg include a crotch girth A, a thigh girth B, a knee girth D, and a minimum shank girth G. Herein, the thigh girth B means the largest cross-sectional profile of the thigh. The knee girth D means the level girth line passing through the knee point, which is the convex point of the knee while viewed toward the front side of the body by a viewer in front of the body. The minimum shank girth G means the smallest cross-sectional profile of the shank. Besides, other girth lines can be obtained by the interpolation using the thigh girth, the knee girth, and the minimum shank girth.

In the embodiment, the girth lines of the leg further include an upper knee girth C, a lower knee girth E, and a maximum shank girth F, and they are not obtained by interpolation but meaningful in structure. In general, the cross-sectional profile of the shank will, from top to bottom, become bigger and then smaller after the transition, and the maximum shank girth F means the location where the variation transition of the cross-sectional profile of the shank occurs. The upper knee girth C and the lower knee girth E are respectively the level girth lines of the upper edge and lower edge of the convex portion of the kneecap while a human is standing.

In the embodiment, the feature-based data structure of the leg has 25 girth lines for example, and each of the girth line has 38 feature points, so the feature-based data structure of the leg totally has 950 feature points.

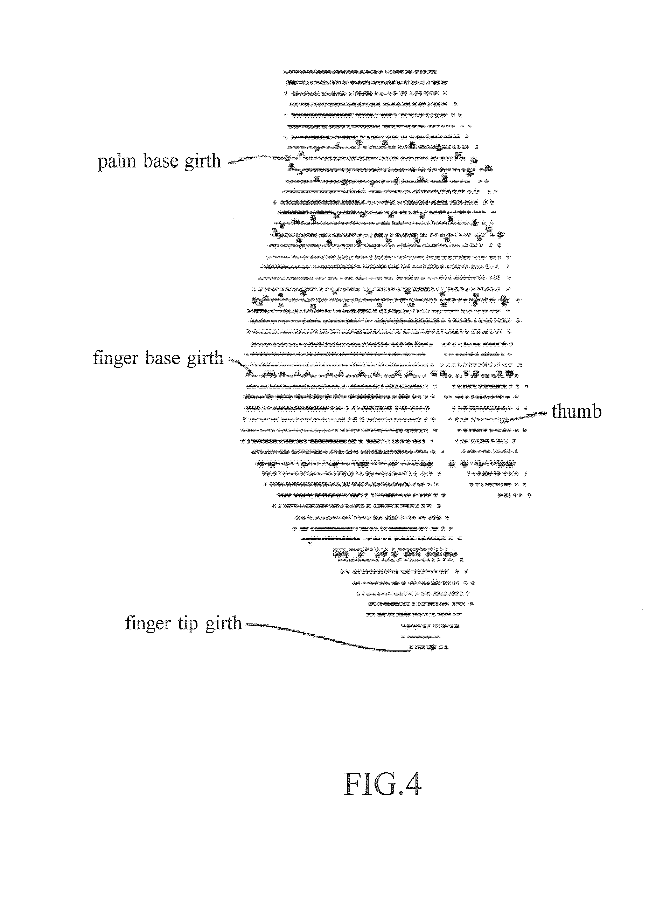

FIG. 4 is a schematic diagram of a feature-based data structure of a digital manikin pertaining to a palm according to a preferred embodiment of the invention.

The feature-based data structure of the palm is for describing the exterior features of a body, and includes a plurality of feature points of the body, and a plurality of girth lines passing through the feature points.

In the embodiment, the girth lines of the simplified palm (such as fingers close to each other) include a palm base girth, a finger base girth, and a finger tip girth. The palm base girth means the location where the size variation of the cross-sectional profile from the fore arm to the palm is the largest. The finger base girth means the location where the cross-sectional profile of the base of the four fingers (excluding the thumb) is largest. To be noted, the finger base girth doesn't include the thumb base. The finger tip girth means the location where the cross-sectional profile of the finger tips is smallest while the five fingers are close to each other and bent a little. Herein, the finger tip girth is close to the medius tip. Besides, other girth lines of the palm can be obtained by the interpolation using the palm base girth, the finger base girth, and the finger tip girth.

In the embodiment, the feature-based data structure of the palm has 7 girth lines for example. The last girth line (the finger tip girth) only has 1 feature point, and the other girth lines each have 20 feature points. So, the feature-based data structure of the palm totally has 121 feature points, and that of a pair of palms totally has 242 feature points.

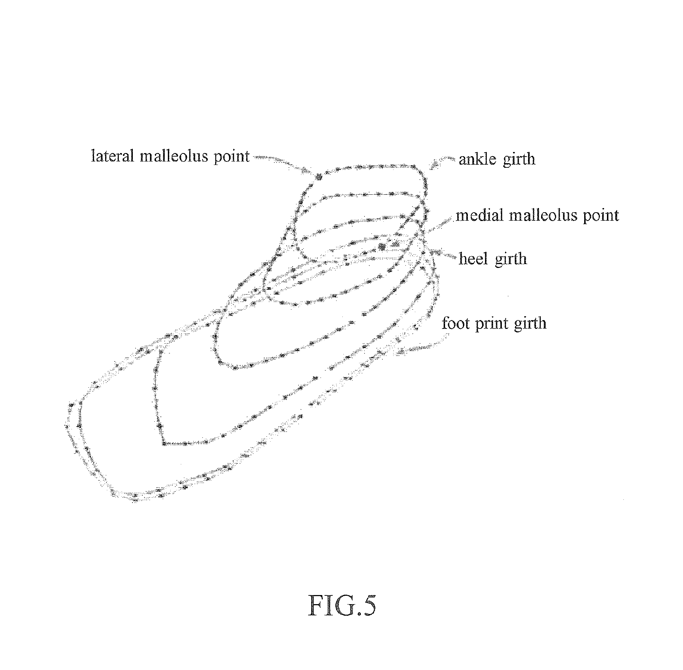

FIG. 5 is a schematic perspective view of a feature-based data structure of a digital manikin pertaining to an ankle according to a preferred embodiment of the invention. Besides, the feature-based data structure of the ankle can be known more by referring to FIG. 3.

The feature-based data structure of the ankle is for describing the exterior features of a body, and includes a plurality of feature points of the body, and a plurality of girth lines passing through the feature points.

In the embodiment, the girth lines of the ankle include an ankle girth H, a heel girth I, and a foot print girth J. The ankle girth H passes through a medial malleolus point and a lateral malleolus point. In general, the cross-sectional profile of the ankle will become larger and then smaller along the downward direction, and the ankle girth means the location where the transition variation of the cross-sectional profile occurs. The medial malleolus point is the malleolus point on the inside of the body, and the lateral malleolus point is the malleolus point on the outside of the body. The heel girth is the level girth line passing through the protruding portion of the heel. The heel has been defined in shoemaking and anthropometry, so it is omitted here. The foot print girth is the girth line contacting the ground while the five toes are close to each other. Besides, other girth lines of the ankle can be obtained by the interpolation using the ankle girth, the heel girth, and the foot print girth.

In the embodiment, the feature-based data structure of the ankle has 6 girth lines for example. Two girth lines among them are obtained by the interpolation, and an interpolated girth line between the heel girth and the foot print girth serves as the toe base girth. Each of the 6 girth lines has 38 feature points, so the feature-based data structure of the ankle has totally 228 feature points, and a pair of ankles totally has 456 feature points. By the feature-based data structure of the ankle, the anthropometry can be applied to the manufacturing industry of shoes and socks.

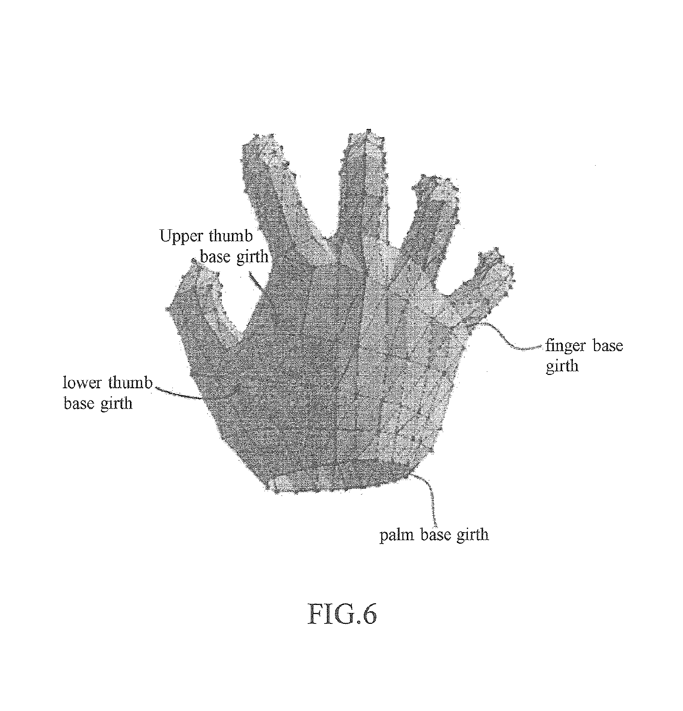

FIG. 6 is a schematic diagram of a feature-based data structure of a digital manikin pertaining to a palm according to a preferred embodiment of the invention. To be noted, the feature-based data structure of the palm as shown in FGI. 4 can be regarded as a simplified version, and that as shown in FIG. 6 can be regarded as an exquisite version.

The feature-based data structure of the palm is for describing the exterior features of a body, and includes a plurality of feature points (as shown the black points in FIG. 6) of the body, a plurality of girth lines passing through the feature points, and a plurality of meridian lines, each of which is formed by connecting the corresponding feature points respectively out of the girth lines.

In the embodiment, the girth lines of the exquisite palm (such as the fingers spread) include a palm base girth, a lower thumb base girth, an upper thumb base girth, and a finger base girth. The palm base girth means the location where the size variation of the cross-sectional profile from the fore arm to the palm is the largest. The lower thumb base girth is the girth line passing through the lower side of the thumb base. The upper thumb girth is the girth line passing through the upper side of the thumb base. The finger base girth is the girth line passing the four fingers' (excluding the thumb) bases while the four fingers are spread a little. Besides, other girth lines can be obtained by the interpolation using the palm base girth, the lower thumb girth, the upper thumb girth, and the finger base girth.

In the embodiment, the palm is divided into a palm portion and a finger portion. The palm portion has 6 girth lines for example. A girth line is obtained by the interpolation between the palm base girth and the lower thumb base girth. Another girth line exists between the upper thumb base girth and the finger base girth, not formed by the interpolation but by connecting the joints of the four finger's bases. The first three girth lines (the palm base girth, the lower thumb base, and an interpolated girth line there between) each have 20 feature points, and the last three girth lines each have 16 feature points.

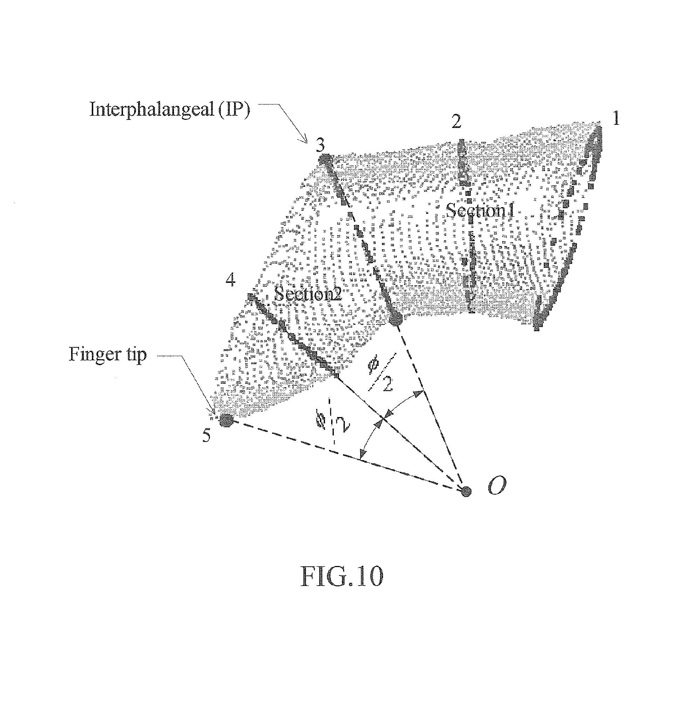

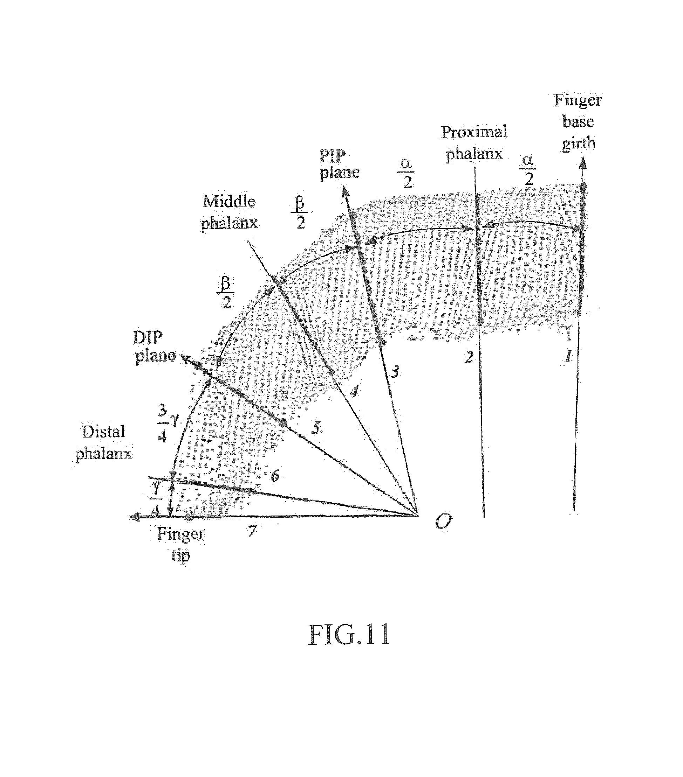

The finger portion includes the thumb and the other four fingers. As shown in FIG. 10, the thumb of the finger portion has 5 girth lines for example, the first four girth lines each have 8 feature points, and the last girth line has 1 feature point at the finger tip. The third girth line of the thumb passes through the interphalangeal (IP), the fifth girth line of the thumb passes through the finger tip. The other four fingers of the finger portion each have 7 girth lines for example, the first six girth lines each have 8 feature points, and the last girth line has 1 feature point at the finger tip. Accordingly, all the meridian lines of each of the finger will meet at the finger tip. FIG. 11 shows the girth lines of one of the fingers. The first girth line is the finger base girth, the second one is the girth line passing through the proximal phalanx, the third one is the level girth line passing through the proximal interphalangeal (PIP), the fourth one is the girth line passing through the middle phalanx, the fifth one is the level girth line passing through the distal interphalangeal (DIP), the sixth one is the girth line passing through the distal phalanx, and the seventh one is the last girth line passing through the finger tip. The first, third, fifth, and seventh girth lines pass through the natural features of the finger, such as the finger base, the PIP joint, the DIP joint, and the finger tip, and the second, fourth, and sixth girth lines are obtained by the interpolation using the girth lines as mentioned above. To be noted, the angles as shown in FIG. 11 pertaining to the interpolation are just for example, but not for limiting the scope of the invention.

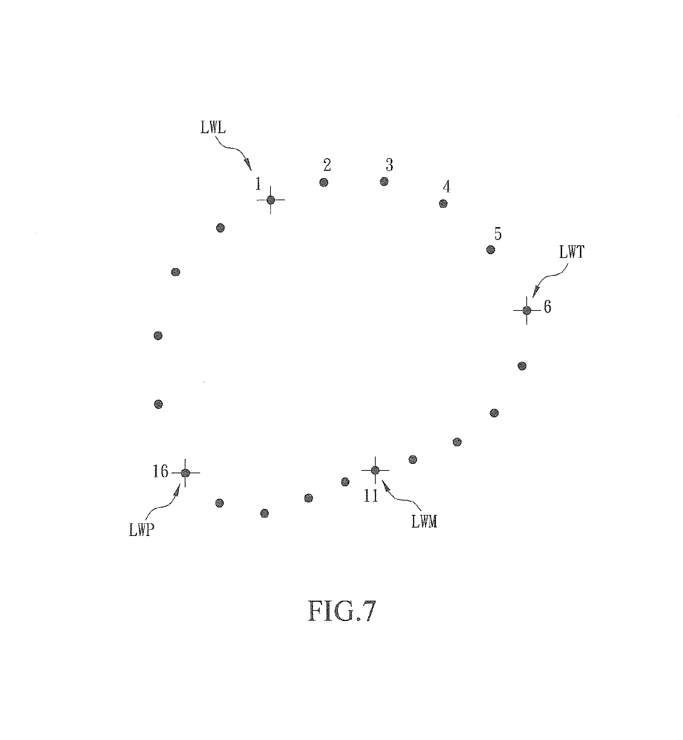

FIG. 7 is a schematic diagram of the palm base girth of the palm of the feature-based data structure of the digital manikin according to the preferred embodiment of the invention. FIG. 7 shows the 20 feature points of the palm of the left hand, and they come from different meridian lines, but belong to the same girth line. The main feature points (1, 6, 11, 16) are defined as the chart 1. In the chart 1, the first letters "L" and "R" respectively mean the left hand and the right hand, the second letter "W" means the wrist, and the third letters "L", "T", "M", and "P" respectively mean the lateral side, the thumb side, the medial side, and the pinky side.

| Name | | Feature point location |
|---|---|---|
| Left-side | Right-side | |
| LWL | RWL | Middle location of the connection of the palm and the wrist on the lateral side of the palm |
| LWT | RWT | Connection of the palm and the wrist on the thumb side |
| LWM | RWM | Middle location of the connection of the palm and the wrist on the medial side of the palm |
| LWP | RWP | Connection of the palm and the wrist on the pinky side of the palm |

### Chart 1

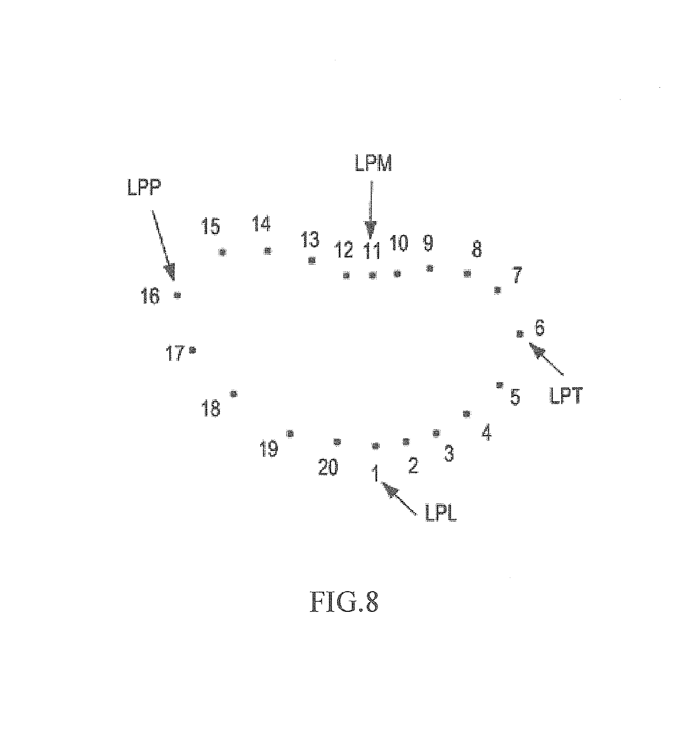

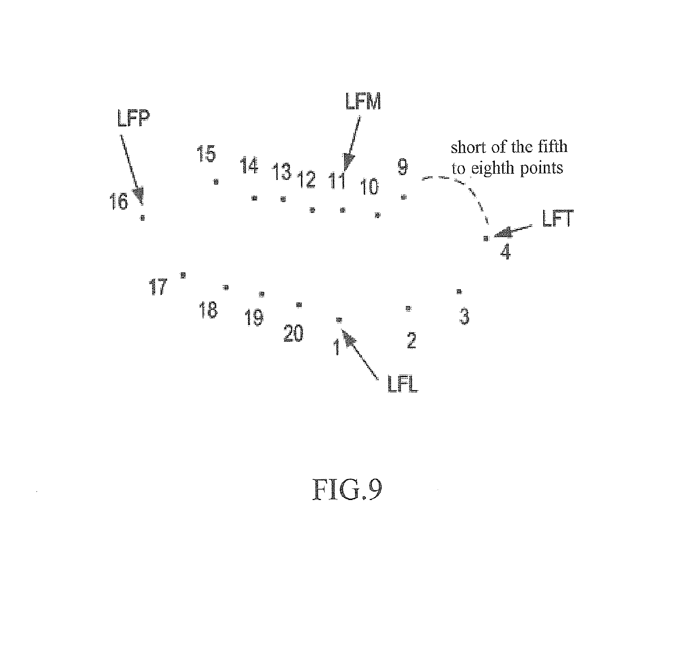

FIG. 8 shows the lower thumb base girth of the palm of the feature-based data structure of the digital manikin according to the preferred embodiment of the invention. The lower thumb base girth of the left hand as shown in FIG. 8 has 20 feature points, and they are out of different meridian lines, but belong to the same girth line. The main feature points (1, 6, 11, 16) are defined as the chart 2. In the chart 2, the first letters "L" and "R" respectively mean the left hand and the right hand, the second letters "P" and "F" respectively mean the palm base side and the finger side, and the third letters "L", "T", "M", and "P" respectively mean the lateral side, the thumb side, the medial side, and the pinky side. FIG. 9 shows the upper thumb base girth of the palm of the feature-based data structure of the digital manikin according to the preferred embodiment of the invention. The upper thumb base girth of the left hand as shown in FIG. 9 has 16 feature points (short of the four points from the fifth to eighth because the upper thumb base girth doesn't pass through the thumb), and they are out of different meridian lines, but belong to the same girth line. The main feature points (1, 4, 11, 16) are defined as the chart 2.

| Name | | Feature point location |
|---|---|---|
| Left-side | Right-side | |
| LPL | RPL | Middle location on the lateral side of the palm of the lower thumb base girth |
| LPT | RPT | On the thumb side of the palm of the lower thumb base girth |
| LPM | RPM | Center of the palm at the lower thumb base girth |
| LPP | RPP | On the pinky side of the palm of the lower thumb base girth |
| LFL | RFL | Metacarpophalangeal (MCP) on the lateral side of the palm of the upper thumb base girth |
| LFT | RFT | Location adjacent to the thumb base on the lateral side of the palm of the upper thumb base girth |
| LFM | RFM | MCP of the medius medial side of the palm of the upper thumb base girth |
| LFP | RFP | Adjacent to the pinky side of the palm of the upper thumb base girth |

### Chart 2

In summary, by the feature-based data structure of the invention, the non-structured point cloud obtained by the 3D body scanning can be arranged to become the structured data truly describing the body profile with the most simplified structure, and thus the body data can be reduced a lot. The meridian lines and the girth lines disclosed in the invention all pass through the feature points of the body, and are similar to the longitude and latitude of the earth respectively, but not arranged in the regular angle. Besides, the meridian lines and girth lines of the invention are designed according to the body features, so all the feature points and feature lines that the human factor engineering needs are included, and can be applied to the fields such as medical engineering, anthropometry, and dress designing. Furthermore, all the joint locations and kinematics parameters of the body also can be defined by using the locations of the feature points of the meridian lines and girth lines.

Besides, the simplified feature-based data structure of the invention can be easily and efficiently stored, retrieved, manipulated, processed, displayed, and transmitted rapidly through the network. Furthermore, some part of the feature-based data structure can be extracted to do the related product design for human beings. Accordingly, the invention provides an advanced and standardized method for the world to record the geometric features of human beings. By the method, all countries in the world can easily build up their own anthropometry database, and this will provide very large advantage to the collection and statistics of the human physique, the studies of human factor engineering, military affairs, and medical science, as well as the business of animation, entertainment, and human appliances. Therefore, the feature-based data structure of the digital manikin of the invention is worthy of promoting as a world standard.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A feature-based data structure of a digital manikin for describing the exterior features of a body, comprising:
a plurality of feature points of the body;
a plurality of girth lines passing through the feature points; and
a plurality of meridian lines, each of which is formed by connecting the
corresponding feature points respectively out of the girth lines, wherein the girth lines of an arm of the body includes an arm-hole girth, an elbow girth, and a palm base girth, the arm-hole girth passes through the shoulder end point, the front arm pit, and the rear arm pit, the elbow girth passes through the concave and convex points on the elbow girth, and the palm base girth means the location where the size variation of the cross-sectional profile from the fore arm to the palm is the largest.

2. The feature-based data structure of a digital manikin as recited in claim 1, wherein other girths of the arm are obtained by the interpolation using the arm-hole girth, the elbow girth, and the palm base girth.

3. A feature-based data structure of a digital manikin for describing the exterior features of a body, comprising:
a plurality of feature points of the body;
a plurality of girth lines passing through the feature points; and
a plurality of meridian lines, each of which is formed by connecting the
corresponding feature points respectively out of the girth lines, wherein the girth lines pertaining to the body's leg include a crotch girth, a thigh girth, a knee girth, and a minimum shank girth, the thigh girth means the largest cross-sectional profile of the thigh, the knee girth is the girth line passing through the knee point, and the minimum shank girth means the smallest cross-sectional profile of the shank.

4. The feature-based data structure of a digital manikin as recited in claim 3, wherein other girth lines of the leg are obtained by the interpolation using the thigh girth, the knee girth, and the minimum shank girth.

5. A feature-based data structure of a digital manikin for describing the exterior features of a body, comprising:
a plurality of feature points of the body; and
a plurality of girth lines passing through the feature points, wherein the girth
lines of a palm include a palm base girth, a finger base girth, and a finger tip girth, the palm base girth means the location where the size variation of the cross-sectional profile from the fore arm to the palm is the largest, the finger base girth means the location where the cross-sectional profile of the base of the four fingers is largest while the five fingers are close to each other and bent a little, and the finger tip girth means the location where the cross-sectional profile of the finger tips is smallest while the five fingers are close to each other and bent a little.

6. The feature-based data structure of a digital manikin as recited in claim 5, wherein other girth lines of the palm are obtained by the interpolation using the palm base girth, the finger base girth, and the finger tip girth.

7. A feature-based data structure of a digital manikin for describing the exterior features of a body, comprising:
a plurality of feature points of the body; and
a plurality of girth lines passing through the feature points, wherein the girth
lines of an ankle include a ankle girth, a heel girth, and a foot print girth, the ankle girth passes through a medial malleolus point and a lateral malleolus point, the heel girth is the level girth line passing through the protruding portion of the heel, and the foot print girth is the girth line contacting the ground while the five toes are close to each other.

8. The feature-based data structure of a digital manikin as recited in claim 7, wherein other girth lines of the ankle can be obtained by the interpolation using the ankle girth, the heel girth, and the foot print girth.

9. A feature-based data structure of a digital manikin for describing the exterior features of a body, comprising:
a plurality of feature points of the body;
a plurality of girth lines passing through the feature points; and
a plurality of meridian lines, each of which is formed by connecting the
corresponding feature points respectively out of the girth lines, wherein the girth lines of a palm include a palm base girth, a lower thumb base girth, an upper thumb base girth, and a finger base girth, the palm base girth means the location where the size variation of the cross-sectional profile from the fore arm to the palm is the largest, the lower thumb base girth is the girth line passing through the lower side of the thumb base, the upper thumb girth is the girth line passing through the upper side of the thumb base, and the finger base girth is the girth line passing the four fingers' bases while the four fingers are spread a little.

10. The feature-based data structure of a digital manikin as recited in claim 9, wherein the palm is divided into a palm portion and a finger portion, and other girth lines of the palm portion are obtained by the interpolation using the palm base girth, the lower thumb girth, the upper thumb girth, and the finger base girth.

11. The feature-based data structure of a digital manikin as recited in claim 9 or 10, wherein the palm is divided into a palm portion and a finger portion, the finger portion includes the thumb and the other four fingers, the thumb has five girth lines, among which the first four girth lines each have eight feature points and the last girth line has one feature point at the finger tip, and the other fingers each have seven girth lines, among which the first six girth lines each have eight feature points and the last girth line has one feature point at the finger tip.
